# EUROPEAN PATENT SPECIFICATION

(11) **EP 0 421 801 B1**
(45) Date of publication and mention of the grant of the patent: **06.09.1995**
(21) Application number: 90310907.2
(22) Date of filing: 04.10.1990
(51) Int. Cl.: B29C 70/48, B29C 33/24, B29C 33/20

(54) **Resin transfer moulding equipment**
"RTM" Verarbeitungsanlage
Equipement "RTM"

(30) Priority: 06.10.1989 GB 8922584
(43) Date of publication of application: 10.04.1991
(73) Proprietor: FORD MOTOR COMPANY LIMITED, Brentwood Essex (GB); FORD-WERKE AKTIENGESELLSCHAFT, 50725 Köln (DE); FORD FRANCE S. A., 92506 Rueil-Malmaison Cédex (FR); FORD MOTOR COMPANY, Dearborn, MI 48120 (US)
(72) Inventor: Kendall, Kenneth Neil, Beeston, Nottingham (GB); Middleton, Victor, Risley, Derbyshire, DE7 3ST (GB); Owen, Michael John, Bramcote, Nottingham, NG9 3BE (GB); Rudd, Christopher Douglas, Lenton Abbey, Nottingham, NG9 2SX (GB)
(74) Representative: Messulam, Alec Moses

(56) References cited:
- EP-A- 0 285 046
- GB-A- 2 025 310
- US-A- 3 956 058

## Description

### Field of the Invention

This invention relates to moulding equipment, particularly resin transfer moulding equipment.

### Description of prior art

In many moulding processes, a mould cavity is formed from two separable mould halves. Plastics material is introduced into the mould cavity and allowed to cure. The two mould halves are then separated to allow removal of the cured moulding. In resin transfer moulding, a dry preform of fibrous material, such as glass fibre, is first loaded into the mould cavity and liquid thermosetting resin is used to impregnate the preform and to form the final product.

Automatic moulding machines are known in which two mould halves are mounted in a frame for movement into and out of a closed position in which they define the mould cavity. For example, US-3380117 and US-3473196 disclose machines of this type in which one of the mould halves may be moved vertically with respect to the other; GB-1541160, GB-2158389 and GB-2064415 disclose moulding equipment in which one of the mould halves is slidable horizontally with respect to the other.

Problems can arise in maintaining the two mould halves parallel to each other during separation since the two mould halves tend to stick together. Such misalignment can result in damage to the moulding or the equipment. These problems are particularly acute in the production of large generally flat moulding such as vehicle body panels, where more than one actuator is required to separate the mould halves, and the actuators are widely spaced from each other. Japanese patent publications Nos 63-132018, 63-125312 and 63-63-199614 disclose moulding machines in which an equalising mechanism in the form of four inter-connected ball-screws or racks-and-pinions positioned at each corner of the mould half is used to transmit irregularities of movements from any one one corner to the other three. However, all the machines include a single central hydraulic actuator to raise and lower a mould half which is inadequate for large-scale mouldings such as vehicle body panels.

More particularly, EP-A-285046 (cf. the preamble of claim 1) discloses a device for use in the production of a trough-shaped moulded item, which device comprises a frame in which mould halves are mounted. Means are provided for moving the moulds into and out of a closed position defining a mould cavity into which resin may be introduced. One mould half is movable towards and away from another mould half by means of a carriage at either end and from which centrally positioned support arms for the mould half extend. The carriages are located on guide columns forming part of a frame and are each moved by two screw devices straddling the support arms all of which screw devices are driven by a single motor driven chain.

### Summary of the invention

According to the present invention there is provided resin transfer moulding equipment comprising a frame having a plurality of pillars (1a-d) on each of which is mounted a carriage (15a-d), first and second mould halves (8,12) mounted in the frame, the second mould half (12) being connected to carriages (15a-d) and moveable into and out of a closed position in which the mould halves (8,12) define a mould cavity into which resin may be introduced, characterised in that each carriage (15a-d) is raised and lowered by a respective one of a plurality of lifting jacks (50a-d), and in that a separate drive mechanism (60a-d) is provided for transferring movement from one lifting jack (50a-d) to the other lifting jack or jacks.

The lifting jacks facilitate the separation of the mould halves, and the drive mechanism ensures that the separation occurs evenly, which protects the moulding and the equipment from damage during separation and also contributes to a reduction in cycle time for the moulding process.

The frame preferably comprises a plurality of upright pillars on each of which is mounted a carriage capable of travelling along the pillar, and each carriage is connected to the second mould and to a respective one of the lifting jacks. With such a construction, the drive mechanism preferably comprises chain drives mounted on the frame and interconnecting the carriages.

Preferably, each mould half comprises a shell defining a mould surface and a support for the shell, the support being sufficiently rigid to prevent deformation of the shell during the moulding process. The shells may be removably mounted on the supports so that the same equipment can be used to produce different mouldings simply by interchanging the shells. In order to accommodate shells of different sizes, the first mould half may be mounted on one or more stands the height of which is adjustable. Alternatively, the first mould half may be mounted for movement out of the frame, for example on rollers, for replacement by another mould half carrying a different shell.

In the preferred embodiment of the invention, the shells of at least one mould half, and preferably both, comprises means for heating the mould surface, for example in the form of a plurality of heating elements and means for controlling individually the temperatures of the heating elements.

The mould halves are preferably clamped together in the closed position, the means for moving mould halves being disengagable therefrom when the clamping means is engaged. By separating the operation of the clamping means from the means for moving the mould halves, the means for moving the mould halves offers no resistance to the clamping means, thereby facilitating an accurate alignment of the mould halves in their closed position.

### Brief description of the drawings

A preferred embodiment of the invention will now be described, by way of example only, with reference to the accompanying drawings, in which:-
Figure 1 is a front elevation of resin transfer moulding equipment in accordance with the invention;
Figure 2 is a side elevation of the equipment of Figure 1 in the direction of the arrow X;

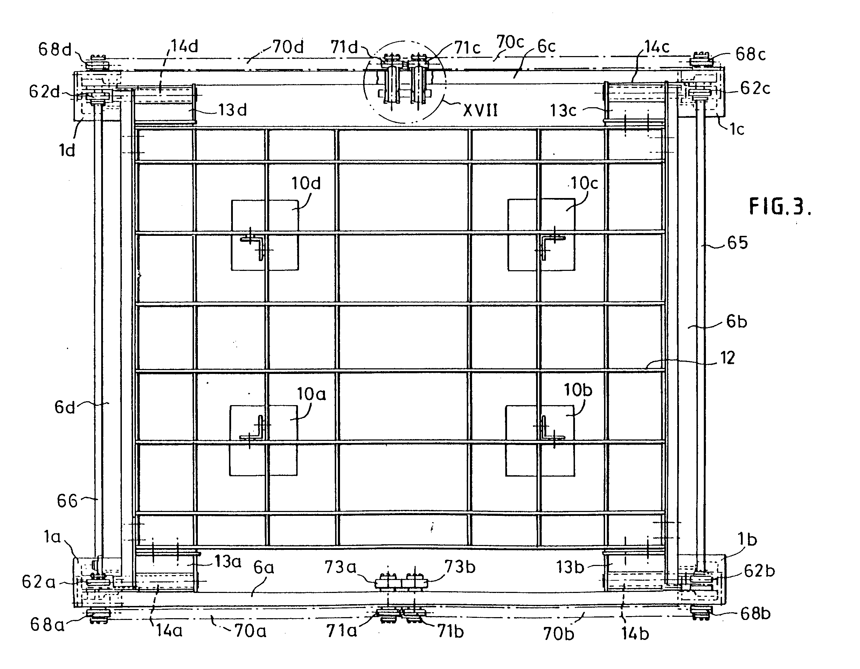

Figure 3 is a plan of the equipment of Figures 1 and 2;
Figure 4 is a plan of a mould shell incorporated in the equipment of Figures 1 to 3;
Figure 5 is a partial cross-section of the mould shell of Figure 4, taken along the line V-V;
Figure 6 is a plan of the opposite surface of the mould shell of Figure 4;
Figure 7 is a cross-section through the mould shell taken along line VII-VII of Figure 6;
Figure 8 is a plan of one side of another mould shell incorporated in the equipment of Figures 1 to 3;
Figure 9 is a cross-section through the mould shell of Figure 8, taken along line IX-IX of Figure 8;
Figure 12 is a cross-section of a carriage forming part of the equipment of Figures 1 to 3;
Figure 13 is a cross-section of the carriage of Figure 4, taken along line XIII-XIII;
Figure 14 is a cross-section through part of the equipment of Figures 1 to 3, taken along line XIV-XIV in Figure 2;
Figure 15 is a cross-section taken along line XV-XV of Figure 14;
Figure 16 is a cross-section through part of the equipment of Figures 1 to 3, taken along line XV-XV in Figure 2;
Figure 17 is a plan, on an enlarged scale, of the part of the equipment in the circle XVIII in Figure 3;
Figure 18 is a partial cross-section taken through a carriage latch mechanism employed in the equipment shown in Figure 1;
Figure 19 is a cross-section along the line XIX of Figure 21;
Figure 20 is a diagram illustrating a heating system for the mould shells of Figures 4 to 9; and
Figure 21 is an elevation of clamp used in the equipment of Figure 1;

### Detailed description of preferred embodiment

Referring to the drawings, resin transfer moulding equipment comprises a frame defined by four hollow rolled steel upright pillars la-d of rectangular cross-section secured at their feet to a concrete bed 5 and bolted at their upper ends to an H-frame composed of four hollow rolled steel cross-members 6a-d.

A first mould half 8 is fixed to the bed 5 by four stands 10a-d. Each stand comprises two X-section beams bolted together and upright L-section locating element mounted on the top of each of the upper beams 10. The height of the first mould half 8 above the bed 5 can be adjusted by removing one or both the beams in each stand, or by inserting shims (not shown) between the stands and the first mould half 8.

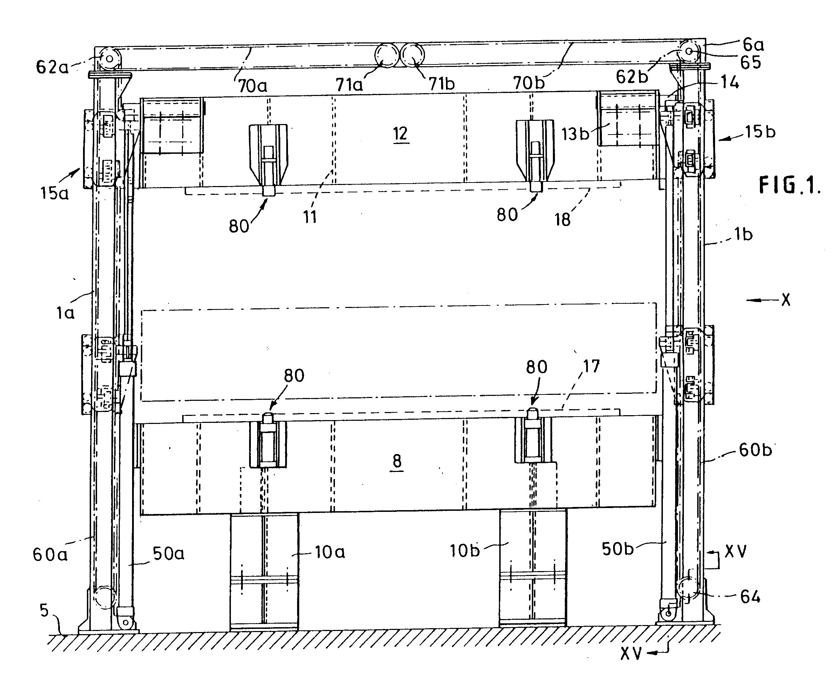

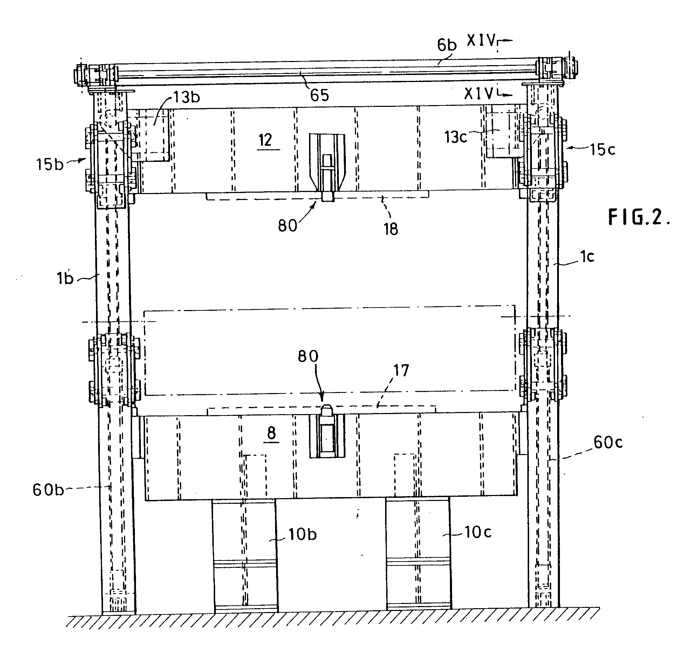

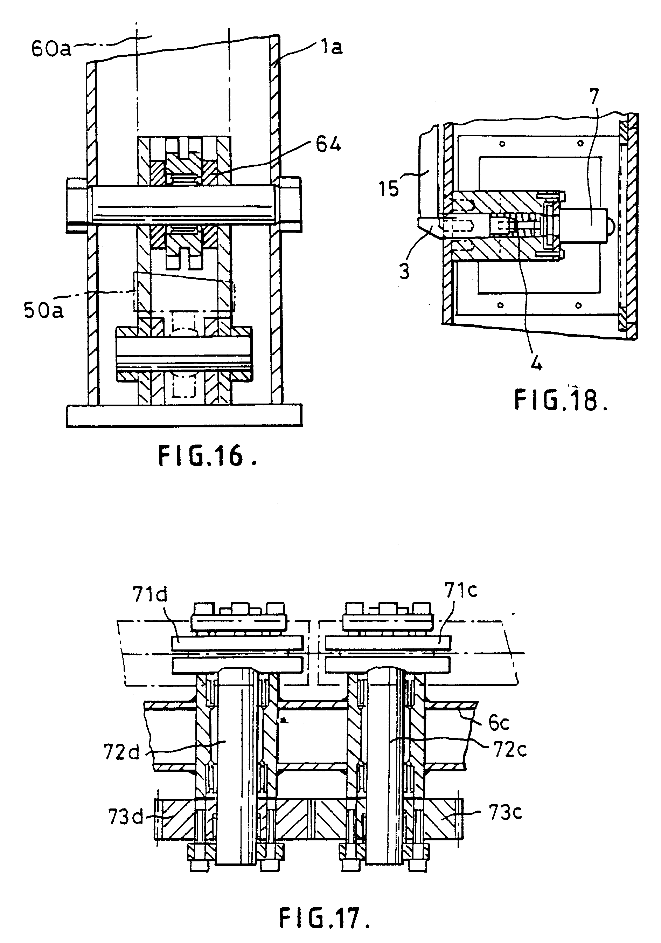

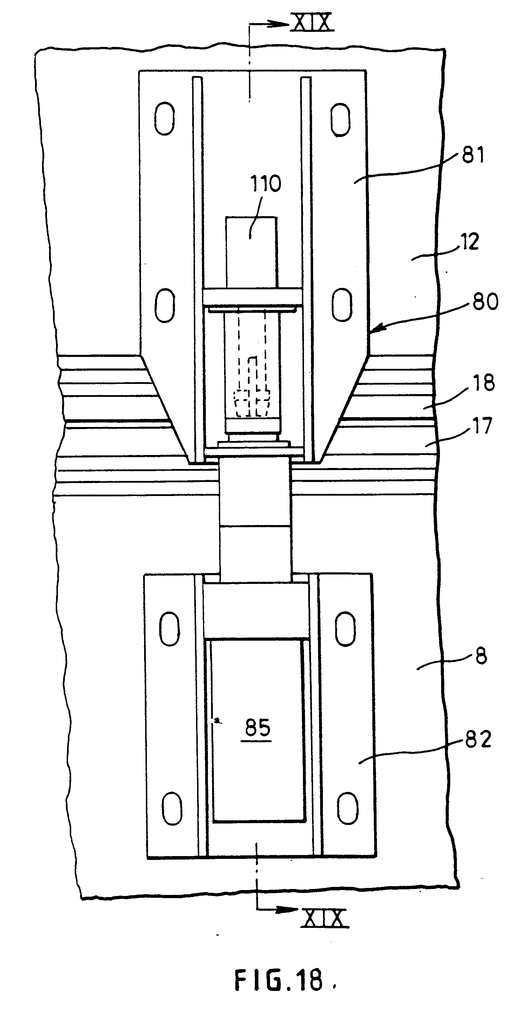

A second mould half 12 is housed within the frame for vertical movement towards and away from the first mould half, as indicated by solid and broken lines in Figures 1 and 2. Each corner of the second mould half 12 carries a mounting bracket 13a-d. Carriage pins 14a-d project laterally from each bracket and rest in a respective one of four carriages 15a-d, each of which can travel up and down the pillars 1a-d. Each carriage is retained in its raised position by a latch mechanism, one of which is illustrated in detail in Figure 18, comprising a bolt 3 mounted within the upright pillar 1 for movement between an extended position, in which it projects through an aperture in the pillar 1 to engage the lower edge of the carriage 15, and a retracted position. The bolt 3 is biased into the extended position by a spring 4, and may be retracted by a pneumatic cylinder 7. The lower leading edge of the bolt 3 is chamfered so that upward movement of the carriage 15 past the bolt drives the bolt into the retracted position.

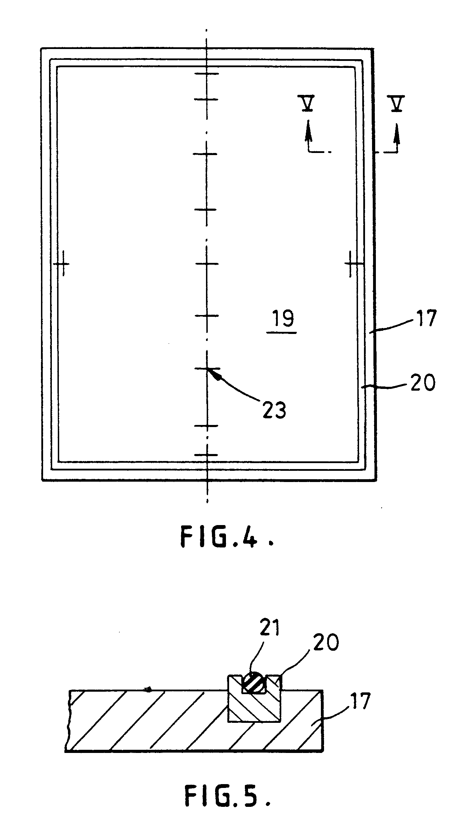

The two mould halves 8,12 are of similar construction, each comprising a series of vertical metal plates arranged in a rectangular grid which forms a rigid support 9,11 for a shell 17,18, which are illustrated in more detail in Figures 4 to 9.

The shell 17 of the first mould half is illustrated in Figures 4 to 7. In the embodiment illustrated, the shell is a rectangular plaque mould suitable for producing flat panels of fibre-reinforced plastics material measuring 4mm x 100cm x 150cm. Other configurations of shell can of course be used to produce articles of different shapes. Non-planar shells would be mounted on a supporting structure preferably in the form of a frame complementary in shape to the reverse face of the shell, and secured to the support 9,11.

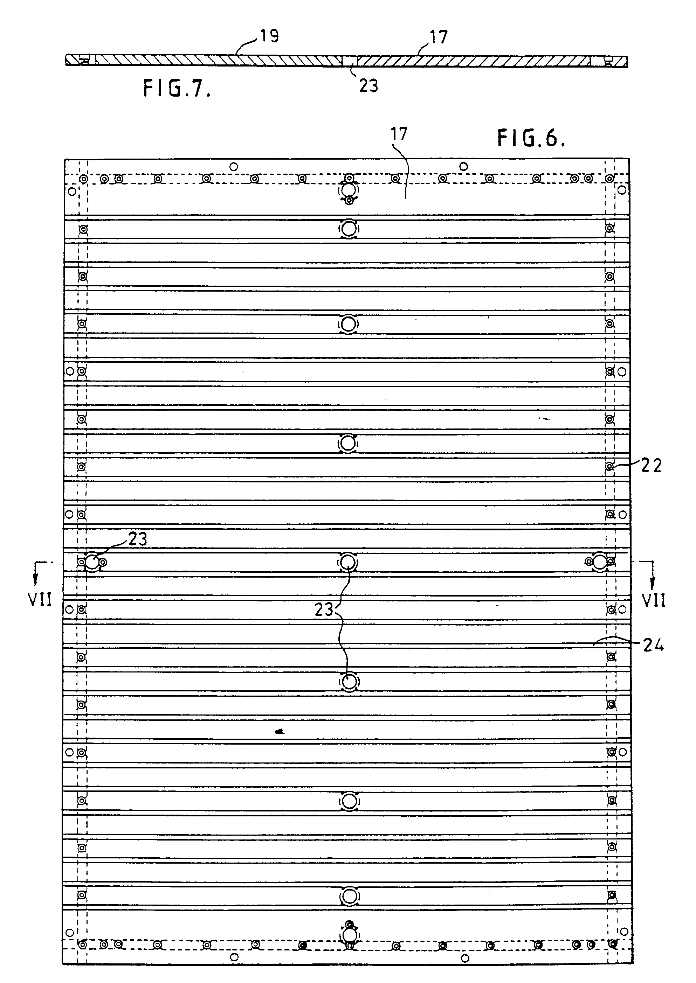

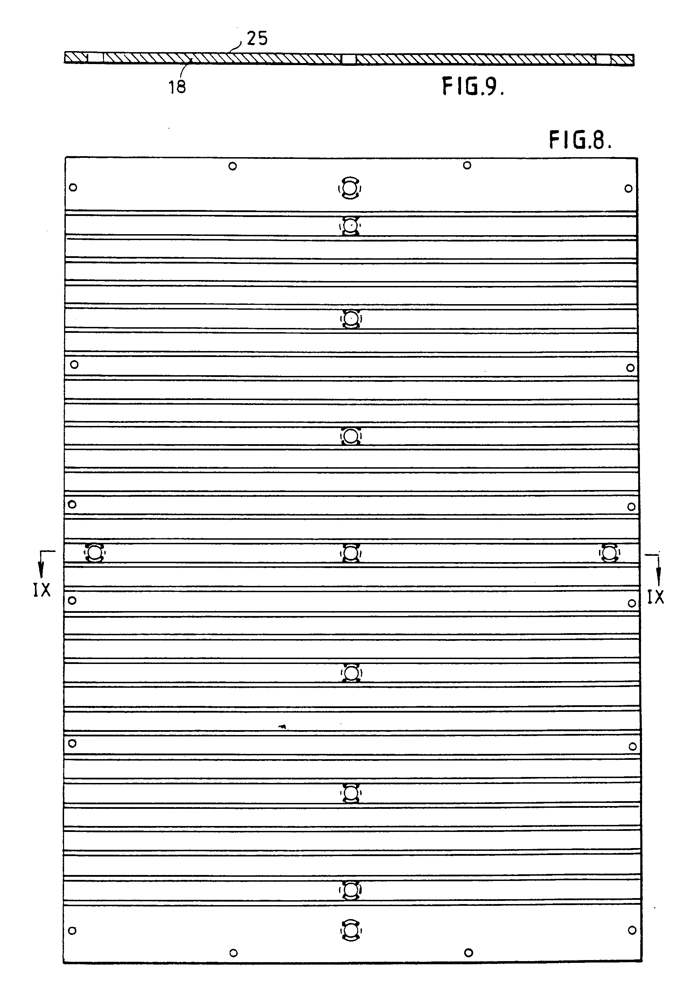

The shell 17 has chromium-plated upper moulding surface 19 and a peripheral rectangular recesses or gallery for receiving a spacer element 20, and a seal 21, as best seen in Figure 5. The peripheral recess is provided with apertures 22 (see Figure 6) through the shell at regular intervals, and the spacer and seal 20,21 are configured to expose one or more of the apertures to permit venting of the mould in use. Further apertures 23,23 along the centre lines of the shell 17 are provided for the injection of resin into the mould or for measuring instruments, such as thermocouples or transducers. The rear surface of the shell 17 is provided with a series of parallel grooves 24 each of which receives a tubular heating element (not shown) through which heated fluid, such as oil, at a predetermined temperature can be passed. The heating elements are secured in the recesses by heat-conducting adhesive, such as an aluminium-filled epoxy resin. The flow of heating or cooling fluid through the heating elements can be controlled so that any required temperature gradient can be established across the shell.

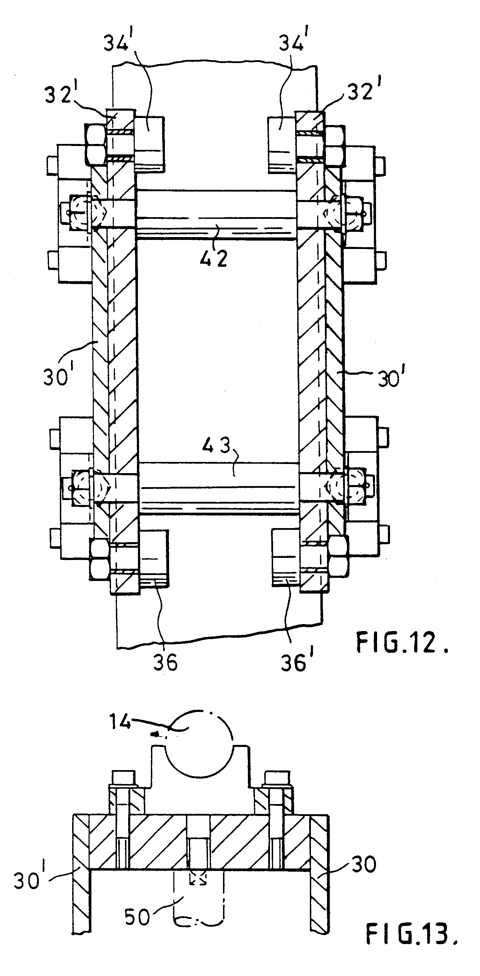

The shell 18 for the second mould half 12 is illustrated in Figures 8 and 9. This shell is also a rectangular plaque mould having a plane chromium-plated lower moulding surface 25 and a rear surface having parallel recesses 26 for tubular heating elements. A series of apertures 27 arranged on the lateral and longitudinal centre line of the shell are provided for the injection of resin. Sensors such as thermocouples and pressure transducers (not shown) may be attached to the shells to enable the progress of the injection process to be monitored. Both shells 17,18 are provided with bolt holes to permit the shells to be bolted to the supports.

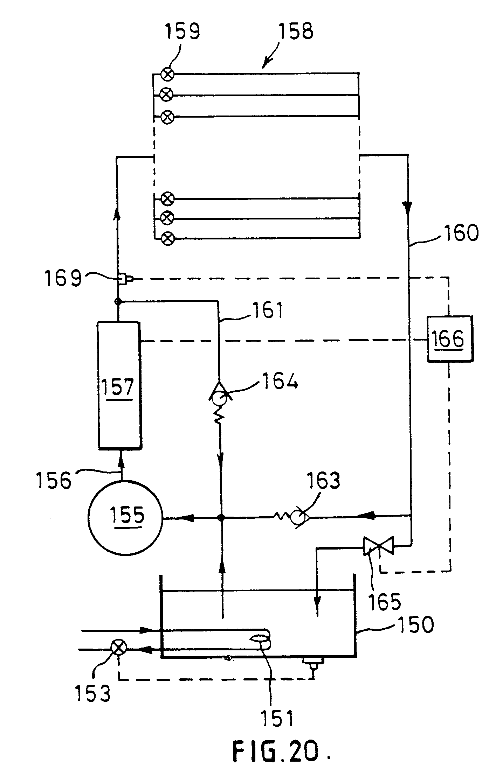

The heating system for the shells 17 is illustrated in more detail in Figure 20. A similar system is provided for the other shell 18. As illustrated in Figure 20, oil is held in a reservoir 150 which contains a heat exchange element 151 through which cooling water can be circulated. The flow of water through the heat exchange element is regulated by a thermostatically-controlled valve 153.

Oil is pumped from the reservoir by a pump 155 along a supply line 156 over an electrically-operated immersion heater 157 and into the array of heating elements 158 in the shell 17. Each element may be opened and closed by a valve 159 so that a desired temperature gradient may be established across the mould surface. Oil emerging from the heating elements is returned to the pump for re-circulation along a return line 160, excess oil being returned via a pump relief line 161. Both the return line 160 and the pump relief line 161 contain check valves 163,164. Hot oil may be returned to the reservoir from the return line through a cooling valve 165. The cooling valve is opened and closed by an electronic temperature controller 166, operable in response to a thermostat 169 in the supply line immediately downstream of the heater 157. The temperature controller 166 also controls the heater 157 so that the temperature of the oil circulating in the system is either increased, by switching on the heater 157, or decreased by returning hot oil the reservoir through the valve 165. The carriages 15a-d are of similar construction, which is illustrated in detail in Figure 12. Each carriage comprises two parallel side plates 30,30' disposed on two opposite sides of the upright pillar 1 along which it travels. Each plate carries two bearing plates 32,32' each of which overlies one of the other two sides of the pillar 1 so that the side plates and bearing plates embrace opposite sides of the pillar. The bearing plates 32,32' each carry an upper roller 34,34' and a lower roller 36,36', which guide the carriage 15 along the pillar. Further guidance for the carriage is provided by two further vertically-spaced rollers mounted in bearing blocks on each of the side plates 30.

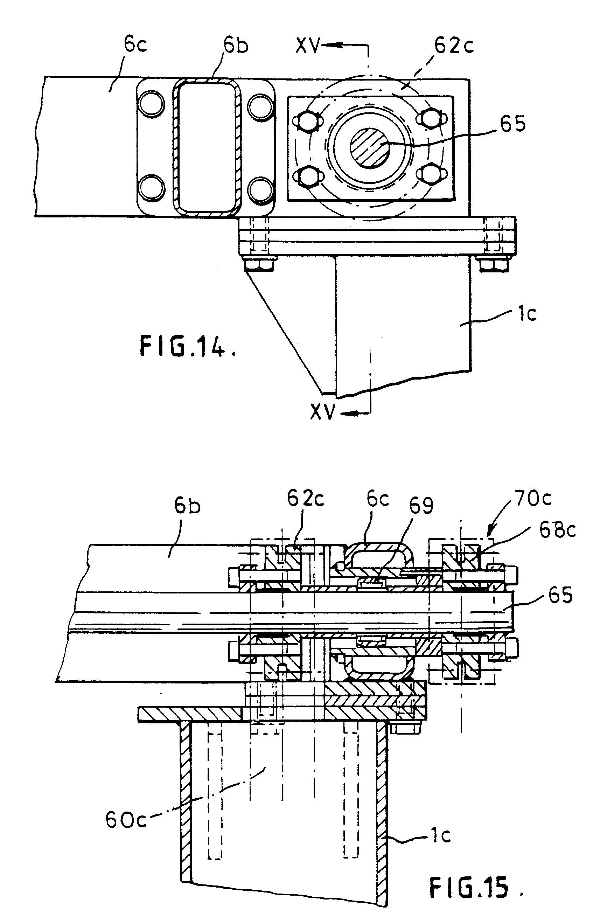

The side plates 30 are bolted to upper and lower spacer bars 42,43 (Figure 12) on one side of the pillar, and to upper and lower anchor blocks on the other side of the pillar. The inwardly-facing edges of the side plates 30,31 are also bolted to a bracket 46 (Figure 13) which is provided with a semi-circular recess for receiving one of the carriage pins 14 on the second mould half 12. Each carriage 15a-d may be moved along the upright pillar 1 by one of four lifting jacks 50a-d of similar construction. The lower end of each jack is pivotally connected to the foot of the pillar 1 (as illustrated in detail with respect to one jack 50a in Figure 15), the upper end of each jack is bolted to the bottom of the bracket 46 on the carriage 15. All four lifting jacks 50a-d are operable hydraulically from a conventional hydraulic control system (not illustrated).

In order to ensure that the four carriages always move in unison, even in the event of failure of one of the jacks, the carriages 15a-d are interconnected by a drive mechanism which transfers the movement of one lifting jack to the others. The drive mechanism comprises four drive chains 60a-d indicated in broken lines in the drawings. Each drive chain 60a-d is connected at each end to the upper and lower anchor blocks of one of the carriages 15a-d.

Each drive chain 60a-d passes upwardly alongside one of the upright pillars 1a-d, over one of four first gear wheels 62a-d mounted in adjustable bearings on top of the pillars 1a-d (illustrated in detail in Figures 14 and 15), down the hollow interior of the pillar, around an idler wheel 64 mounted for rotation in the foot of the pillar 1 (illustrated in detail in Figure 16), through an aperture in the foot of the pillar and upwardly alongside the inner wall of the pillar to the lower anchor block 46 on the carriage 15. Adjustment of the bearings of the gear wheels 62a-d sets the tension in the chains 60a-d to a required level.

The four first gear wheels 62a-d are coupled together in pairs by two drive shafts 65,66 (Figures 1 and 2) mounted in self-aligning bearings 69 (Figure 15) adjacent the cross members 6b and 6d and extending along opposite sides of the frame. The ends of the drive shafts 65,66 carry second gear wheels 68a-d. Each of the second gear wheels is connected by a drive chains 70a-d to one of four transfer wheels 71a-d (illustrated in detail in Figure 17) which are fixed to shafts 72 a-d mounted for rotation in needle bearings towards the centres of the front and rear crossmembers 6a and 6d. The inner ends of the shafts 72a-d carry gear wheels 73a-d which mesh with the gear wheel on the adjacent drive shaft. As a result, the movement of any one jack 50a-d is transmitted to all four carriages.

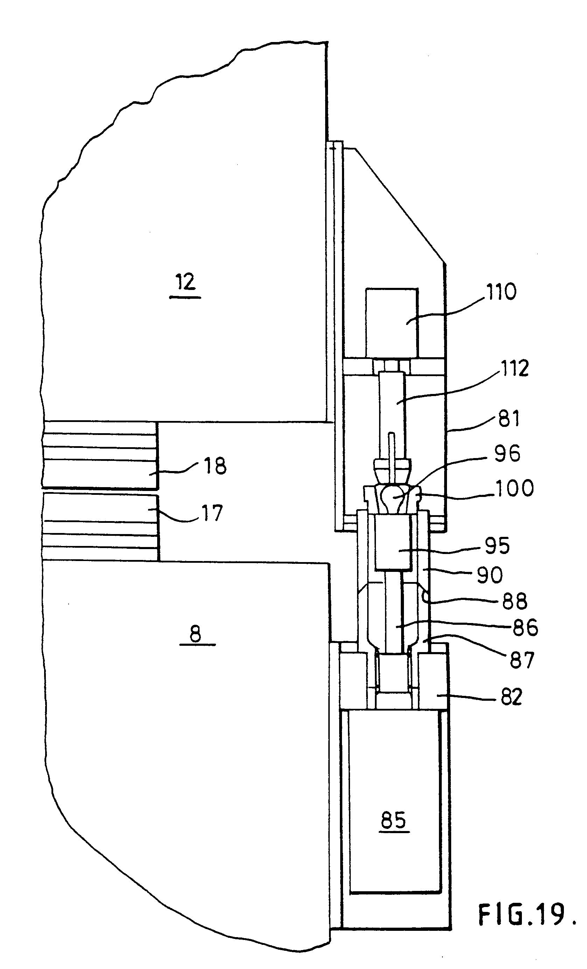

The upper and lower mould halves 12 and 18 may be clamped together in their closed position by six clamps 80, two of which are mounted on each of the longer sides of the mould halves, one further clamp being mounted on each of the shorter sides of the mould halves, as illustrated in Figures 1 and 2. One clamp 80 is illustrated in more detail in Figures 19 and 21.

Referring to Figures 19 and 21, the clamp comprises an upper part 81 and a lower part 82 bolted to the upper and lower mould halves 12,8 respectively. The lower part 82 comprises an hydraulic cylinder 85 from which a piston rod 86 projects vertically upwardly through a hollow cylindrical seat 87, which has a conical upper surface 88. In the closed position of the mould halves illustrated, the upper surface of the seat 87 is received within a collar 90 secured to the upper part 81 of the clamp. The lower surface of the collar 90 has a conical surface complementary to the upper surface of the seat 87 so that, as the mould halves close, the two parts of the clamp are guided into alignment.

The upper end of the piston rod 86 carries a dolly 95 having a spherical head 96 and a cylindrical body 97. When the piston rod 86 is fully extended, as illustrated in Figures 19 and 21, the head 96 extends into a locking ring 100 which rests on the upper part of the body 97. The locking ring can slide partially into the upper end of the collar 90 until a shoulder formed on the external surface of the locking ring engages the upper edge of the collar 90. The internal surface of the locking ring is tapered to form a conical seat.

The upper part 81 of the clamp carries a pneumatic cylinder 110 having a piston rod that carries a collet 112. The lower end of the collet 112 is tapered externally to match the seat formed by the internal surface of the locking ring 100, and has a spherical internal recess for receiving the head of the dolly 95. Four axial slots in the end of the collet allow the collet to expand whilst the head 96 of the dolly is inserted into the collet 112.

In use, the shells 17, 18 are bolted to their respective supports and, depending upon the nature of the resin to be used in the moulding process, heated to an operating temperature. With the second mould half 12 in its raised position, a preform of fibrous reinforcing material is loaded into the shell 17b of the first mould half. The pneumatic cylinders 7 of the latch mechanisms for the carriages 15a-d are then operated to retract the bolts 7, and the lifting jacks are operated to lower the carriages and the second mould half 12 so that the moulding surface 25 of the shell of the second mould half contacts the spacers and seals 20,21 of the shell 17 on the lower mould half. The seats 87 of the clamps 80 engage with their respective collars 90 and align the two mould halves accurately.

Continued downward movement of the carriages causes the brackets 46 to disengage from the carriage pins 14. After the brackets 46 have disengaged from the pins 14, the clamps 80 are actuated. In each clamp, the hydraulic cylinder 85 is initially actuated to extend the dolly 95. When the mould halves 12, 8 are closed, the pneumatic piston 110 on the upper part of the clamp is actuated so that the collet 112 engages the head 96 of the dolly and the seat of the locking ring 100. The hydraulic cylinder 85 on the lower part of the clamp is then actuated to withdraw the piston 86 so that the locking ring slides into collar 90. In this position, the collet is locked over the head of the dolly, and further actuation of the hydraulic cylinder 85 applies a clamping force to the mould halves 12, 8. In this way the full force of the clamps 80 is applied to the mould halves, and, since the lifting jacks are disengaged from the moulds, none of the clamping force is transmitted to the lifting jacks or the frame.

Liquid resin is then injected into the cavity formed by the two shells 17,18 through one or more of the apertures 23 or 27 of the shells. Relatively low pressure is used to inject the resin, for example 2-10 bar, typically 5 bar. The rigidity of the supports of the shells is sufficient to prevent distortion of the shells 17,18 during the injection of resin. The quality of the moulding is therefore maintained. When the mould has been filled with resin, the resin is allowed to cure and the lifting jacks are operated to raise the second mould half 12. The upward movement of each carriage 15a-d is transmitted to all the other carriages through the drive chains 60a-d and 70a-d, the drive shafts 65,66 and the gear wheels 62a-d, 68a-d and 73a-d. Consequently, even if the second mould half should stick to the first mould half during separation of the mould halves, the second mould half will be maintained in a horizontal orientation, thereby reducing the risk of damage to the moulding when the two mould halves are separated.

## Claims

1. Resin transfer moulding equipment comprising a frame having a plurality of pillars (1a-d) on each of which is movably mounted a carriage (15a-d), first and second mould halves (8,12) mounted in the frame, the second mould half (12) being connected to carriages (15a-d) and moveable into and out of a closed position in which the mould halves (8,12) define a mould cavity into which resin may be introduced, characterised in that each carriage (15a-d) is raised and lowered by a respective one of a plurality of lifting jacks (50a-d), and in that a separate drive mechanism (60a-d) is provided for transferring movement from one lifting jack (50a-d) to the other lifting jack or jacks.

2. Equipment according to Claim 1, wherein the drive mechanism comprises chain drives (70a-d) mounted on the frame and interconnecting the carriages (15a-d).

3. Equipment according to Claim 1, wherein each mould half (8,12) comprises a shell (17,18) defining the mould surface and a support (9,11) for the shell, the support being sufficiently rigid to prevent deformation of the shell during the moulding process and further comprising means (80) for clamping the mould halves together in the closed position, the means (50a-d) for moving the mould halves (8,12) being disengageable therefrom when the clamping means is engaged.

4. Equipment according to Claim 3, wherein at least one shell (17,18) comprises means (24,26,158) for heating the mould surface.

5. Equipment according to Claim 5, wherein the means for heating the mould surface comprises a plurality of heating elements (158) and means (157,166) for controlling the temperature of the heating elements.

## Patentansprüche

1. Eine Spritzpressanlage für Harz, bestehend aus einem Rahmen mit einer Vielzahl von Säulen (1a-d), auf die jeweils ein beweglicher Schlitten (15a-d) montiert ist, einer ersten und zweiten, in den Rahmen montierten Formhälfte (8, 12), wobei die zweite Formhälfte mit den Schlitten (15a-d) verbunden ist und in eine geschlossene und aus einer geschlossenen Stellung bewegt werden kann, in der die Formhälften (8, 12) einen Formhohlraum bilden, in den Harz gefüllt werden kann, dadurch gekennzeichnet, dass jeder Schlitten (15a-d) durch jeweils eine von einer Vielzahl von Hebewinden (50a-d) gehoben und gesenkt werden kann und dass ein separater Antriebsmechanismus (60a-d) zur Übertragung der Bewegung von einer Hebewinde (50a-d) zu der anderen oder den anderen Hebewinden vorgesehen ist.

2. Eine Anlage nach Anspruch 1, in welcher der Antriebsmechanismus Antriebsketten (70a-d) enthält, die auf den Rahmen montiert sind und die Schlitten (15a-d) miteinander verbinden.

3. Eine Anlage nach Anspruch 1, in der jede Formhälfte (8, 12) eine Schale (17, 18) enthält, welche die Formoberfläche und eine Stütze (9, 11) für die Schale bildet, wobei die Stütze steif genug ist, um eine Verformung der Schale während des Formvorgangs zu vermeiden, ausserdem bestehend aus Vorrichtungen (80) zum Zusammenklemmen der Formhälften in geschlossener Stellung, wobei die Vorrichtungen (50a-d) zum Bewegen der Formhälften (8, 12) ausrückbar sind, wenn die Klemmvorrichtung betätigt ist.

4. Eine Anlage nach Anspruch 3, in welcher mindestens eine Schale, (17, 18) Vorrichtungen (24, 26, 158) zum Heizen der Formoberfläche enthält.

5. Eine Anlage nach Anspruch 4, in welcher die Vorrichtungen zum Heizen der Formoberfläche eine Vielzahl von Heizkörpern (158) und Vorrichtungen (157, 166) zur Regelung der Temperatur der Heizelemente enthalten

## Revendications

1. Installation de moulage de résine par transfert comprenant un châssis qui comporte une pluralité de piliers (1a à 1d) sur chacun desquels est monté mobile un chariot (15a à 15d), une première moitié de moule et une deuxième moitié de moule (8, 12) montées dans le châssis, la deuxième moitié de moule (12) étant reliée aux chariots (15a à 15d) et pouvant être déplacée jusque dans une position fermée et hors de celle-ci, position dans laquelle les moitiés de moule (8, 12) définissent une cavité de moulage dans laquelle de la résine peut être introduite, caractérisée par le fait que chaque chariot (15a à 15d) est levé et abaissé par un vérin respectif d'une pluralité de vérins de levage (50a à 50d), et par le fait qu'il est prévu un mécanisme d'entraînement séparé (60a à 60d) pour transmettre le déplacement d'un vérin de levage (50a à 50d) à l'autre ou aux autres vérins de levage.

2. Installation selon la revendication 1, dans laquelle le mécanisme d'entraînement comprend des entraînements à chaînes (70a à 70d) qui sont montés sur le châssis et qui relient entre eux les chariots (15a à 15d).

3. Installation selon la revendication 1, dans laquelle par le fait que chaque moitié de moule (8, 12) comprend une coquille (17, 18) qui définit la surface de moulage et un support (9, 11) destiné à la coquille, le support étant suffisamment rigide pour empêcher la déformation de la coquille pendant l'opération de moulage, et qu'elle comprend en outre des moyens (80) pour serrer l'une contre l'autre les moitiés de moule dans leur position fermée, les moyens (50a à 50d) pour déplacer les moitiés de moule (8, 12) pouvant être dégagés de ceux-ci lorsque les moyens de serrage sont en prise.

4. Installation selon la revendication 3, dans laquelle au moins l'une des coquilles (17, 18) comprend des moyens (24, 26, 158) pour chauffer la surface du moule.

5. Installation selon la revendication 4, dans laquelle les moyens pour chauffer la surface du moule comprennent une pluralité d'éléments chauffants (158) et des moyens (157, 166) pour commander la température des éléments chauffants.
